# EUROPEAN PATENT APPLICATION

(11) **EP 4 368 880 A1**
(43) Date of publication of application: **15.05.2024**
(21) Application number: 22206226.7
(22) Date of filing: 08.11.2022
(51) Int. Cl.: F21V 8/00, B60Q 1/00

(54) **LIGHTGUIDE FOR AN AUTOMOBILE LAMP**

(71) Applicant: Hella Autotechnik Nova, s.r.o., 78985 Mohelnice (CZ)
(72) Inventor: Kuchynka, Tomás, 779 00 Olomouc (CZ)
(74) Representative: Bringemeier, Ulrich Heinz

(57) **Abstract**

A lightguide (1) for an automobile lamp. The lightguide (1) comprises a I
ight-entry surface and a row of outcoupling elements oriented along the lightguide's (1) optical axis (2). The first outcoupling element (3) in the row, which is closest to the light-entry surface, comprises an elongated bottom part (4) and two diverging side walls (5) attached to the bottom part (4). The bottom part (4) is oriented with its length (6) extending along the optical axis (2) and the width of the first outcoupling element (3) is the smallest at the bottom part (4).

## Description

### Technical field

The present invention relates to lightguides, especially for automotive industry. More specifically, it relates to a lightguide with a specially shaped first outcoupling element that reduces creation of illumination hot-spots.

### Background of the Invention

Thin lightguides with a substantially constant cross-section are commonly used in the state of the art. These lightguides usually have a light entry surface on one or more of its free ends and have a row of equidistantly arranged outcoupling elements on one of its sides. These elements reflect the passing light towards the opposite side, which forms the lightguide's light-exit surface, and are usually created as indentations, cuts, grooves, notches etc. made into the lightguide's surface. Such a lightguide is described for example in document EP3208525 B1.

The first element in the row of outcoupling elements tends to create inhomogeneity in the outputted light, usually it reflects significantly more light than the subsequent elements and thus creates a so-called hot-spot. A part of the lightguide, closer to the light-entry surface, then appears to be much more brightly lit than the rest of it, which is a visual defect.

It would therefore be advantageous to adapt the existing lightguides in a way, that would remove or limit the development of hot-spots caused by the first outcoupling element.

### Summary of the Invention

The shortcomings of the solutions known in the prior art are to some extent eliminated by a lightguide for an automobile lamp comprising a light-entry surface and a row of outcoupling elements oriented along the lightguide's optical axis. Each outcoupling element from the row is formed as an indentation on the lightguide's surface, e.g., a cut, depression, recess etc., having at least one wall or surface adapted to reflect light by total internal reflection. The first outcoupling element in the row, which is closest to the light-entry surface, comprises an elongated bottom part and two diverging side walls attached to the bottom part. The bottom part can be a sharp edge or corner, but it can also be flat, beveled or rounded, for example to simplify manufacture or "soften" the light the first outcoupling element outcouples. The bottom part delimits the width of the element, wherein the width is measured in direction perpendicular to the optical axis. The bottom part is oriented with its length extending along the optical axis, but it can be inclined with respect to the optical axis, i.e., doesn't have to extend along the axis parallelly. The width of the first outcoupling element is the smallest at the bottom part, i.e., the side walls are farther apart at their ends offset from the bottom part.

The side walls can be planar or curved, the angle between them can be for example 20-90°, preferably 30-70°. For curved side walls, this angle can for example be an average over the whole depth of the element or it can be measured in the middle of the depth etc. The lightguide can be a thin lightguide, e.g., with length at least ten times larger than width or diameter. It can have for example substantially circular cross-section.

The lightguide of the invention, thanks to the first outcoupling element, significantly limits the brightness of the hot-spot formed by light outcoupled by the first element, or even removes the hot-spot altogether. The angled surfaces of the side walls limit the amount of the outcoupled light and/or spread the light over a larger area on the lightguide's light-exit surface, so the hot-spot is less bright.

The row of outcoupling elements may comprise a groove extending along the optical axis, wherein the outcoupling elements from the row are located inside of the groove and the first outcoupling element forms the beginning of the groove. This allows the first outcoupling element to have a longer bottom part and side walls, while being substantially equally distant from the optical axis as the other, much shallower, outcoupling elements. This larger length further limits the brightness of the hot-spot, since the light-reflection area of the element is larger which allows the light to be more spread out. The largest width of the first outcoupling element is then preferably equal to width of the groove, so that the groove does not form any unwanted light reflections.

The bottom part of the first outcoupling element has two ends, wherein the first end is preferably closer to the light-entry surface than the second end, wherein the first end is farther from the optical axis than the second end. In other words, the bottom part is inclined with respect to the optical axis, and is closer to the axis the farther it is from the light-entry surface. This inclination of the bottom part leads to a better hot-spot suppression than a step-like shape of the first outcoupling element.

The first outcoupling element preferably has a "V"-shaped cross-section. This shape is easier to design and manufacture than curved side walls and provides a suitable outcoupling for most applications. The apex of the "V" can be beveled or rounded.

The outcoupling elements other than the first outcoupling element can all have the same shape (e.g., depth, length, width, inclination and/or curvature of walls etc.) and are arranged equidistantly. Preferably, they are formed as notches perpendicular to the optical axis.

### Description of drawings

A summary of the invention is further described by means of exemplary embodiments thereof, which are described with reference to the accompanying drawings, in which:
- Fig 1.: Shows a schematic perspective view of the lightguide according to the invention.
- Fig 2.: Shows an enlarged view of a lightguide according to prior art (Fig. 2A) and of a lightguide according to the invention (Fig. 2B), wherein the difference in shape and orientation of the first outcoupling element can be seen between those two figures.
- Fig 3.: Shows a sectional view of the lightguide according to the present invention wherein the sectional plane cuts through the optical axis and the row of outcoupling elements, such that the depth of the outcoupling elements and inclination of the bottom part of the first outcoupling element can be seen.
- Fig 4.: Shows a diagram of brightness of a lightguide, i.e., the distribution of the outcoupled light, wherein Fig. 4A shows the diagram for a lightguide according to the state of the art, wherein a brightness hot-spot is created, and Fig. 4B shows the diagram for a lightguide according to the invention, where the hot-spot is mostly removed.

### Exemplary Embodiments of the Invention

The invention will be further described by means of exemplary embodiments with reference to the respective drawings. The subject of the invention is a lightguide 1 for an automobile lamp, e.g., for a headlight, taillight, illuminated grill mask etc. The lightguide 1 has its longitudinal optical axis 2 and comprises a row of outcoupling elements, extending along the optical axis 2 on one side of the lightguide 1. The outcoupling elements are configured to reflect light, passing in the lightguide 1 substantially in the direction of the optical axis 2, towards the opposite side of the lightguide 1. This opposite side thus forms a light-exit surface, through which the light leaves the lightguide 1, e.g., oriented towards the cover lens of the lamp. The lightguide 1 further has a light-entry surface, through which the light enters into the lightguide 1. The light-entry surface is preferably on one of the lightguide's 1 ends, i.e., the optical axis 2 passes through the light-entry surface, e.g., it is perpendicular to it.

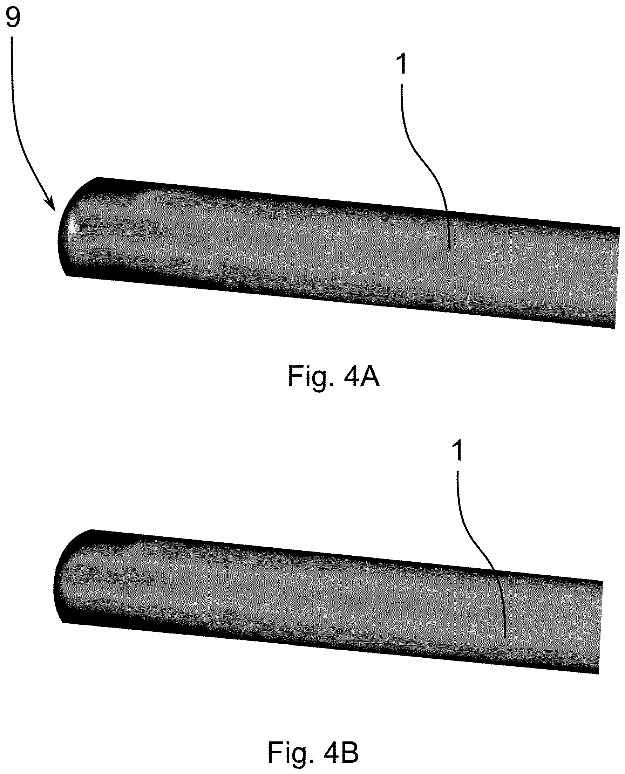

The first outcoupling element 3 of the row, which is closest to the light-entry surface, i.e., it is the first element the passing light hits when traveling through the lightguide 1, has its shape adapted to limit hot-spot 9 creation, i.e., increase homogeneity of the outcoupled light (compare figs. 4A and 4B). The hot-spot 9 is generally on a part of the light-exit surface corresponding to the first outcoupling element 3, which is much more brightly lit then the rest of the surface because the first outcoupling element 3 is more exposed to the incoming light than the other outcoupling elements, each partially hidden behind a previous one.

The first outcoupling element 3 comprises a bottom part 4 and two side walls 5 connected via the bottom part 4. The side walls 5 are inclined with respect to each other and are closer to each other near the bottom than on their free ends farther away from the bottom. In other words, the bottom is the narrowest part of the first outcoupling element 3 and its width increases, preferably gradually, with distance from the bottom. The first outcoupling element 3 is thus substantially V-shaped, in a cross-section perpendicular to the bottom part 4, wherein the apex of the V-shape can be beveled or round, i.e., it may or may not be a sharp edge, it may be a flat, relatively thin, surface, it can be curved (e.g., circular, elliptical or parabolical in cross-section) etc. The side walls might also be planar or curved, inwards or outwards of the V-shape. Substantially planar side walls 5 are however preferable. The mutual angle of the side walls 5 can be for example 20-90°, preferably 30-70°, in order to outcouple an appropriate amount of light. The higher the angle, the more light can be outcoupled by the first outcoupling element 3 and thus the brighter the respective part of the light-exit surface. The choice of this angle thus depends, among other factors, on the shape of the other outcoupling elements, to make the total outcoupled light as homogeneous as possible.

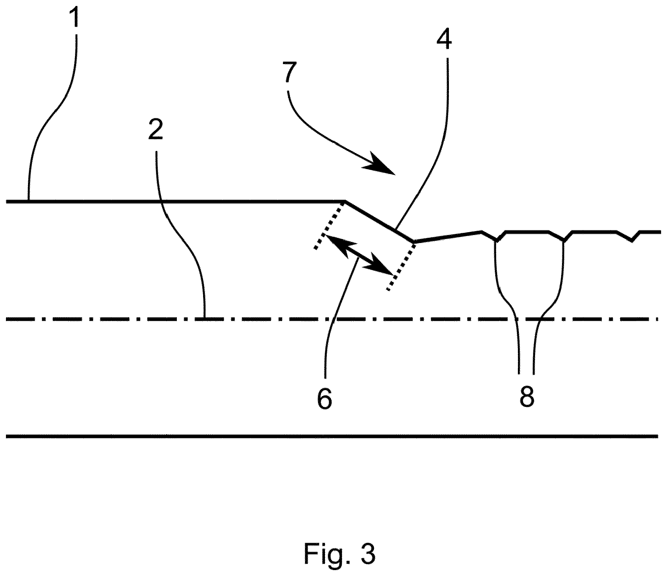

The width of the first outcoupling element 3 can be measured in direction perpendicular to the optical axis 2 (perpendicular to the cross-section of fig. 3) and perpendicular to its depth, which measures how far the outcoupling element runs, from the lightguide's 1 surface towards the optical axis 2, i.e., how much recessed it is (the depth is perpendicular to the optical axis 2 in fig. 3). The length 6 of the first outcoupling element 3 can then be measured along the optical axis 2, and along the longest dimension of the bottom part 4 (see fig. 3). The first outcoupling element 3 is preferably symmetrical with respect to a plane passing through the optical axis 2 (e.g., the sectional plane of fig. 3).

The bottom part 4 is preferably inclined with respect to the optical axis 2, i.e., it is closer to the optical axis 2 the farther it is from the light-entry surface. This inclination further helps with removing the hot-spot 9, it can be used to configure brightness of the light reflected by the first outcoupling element 3. The angle of this inclination, i.e., the angle between the bottom part 4 and the optical axis 2, can be for example from 10° to 60°, preferably from 20° to 45°.

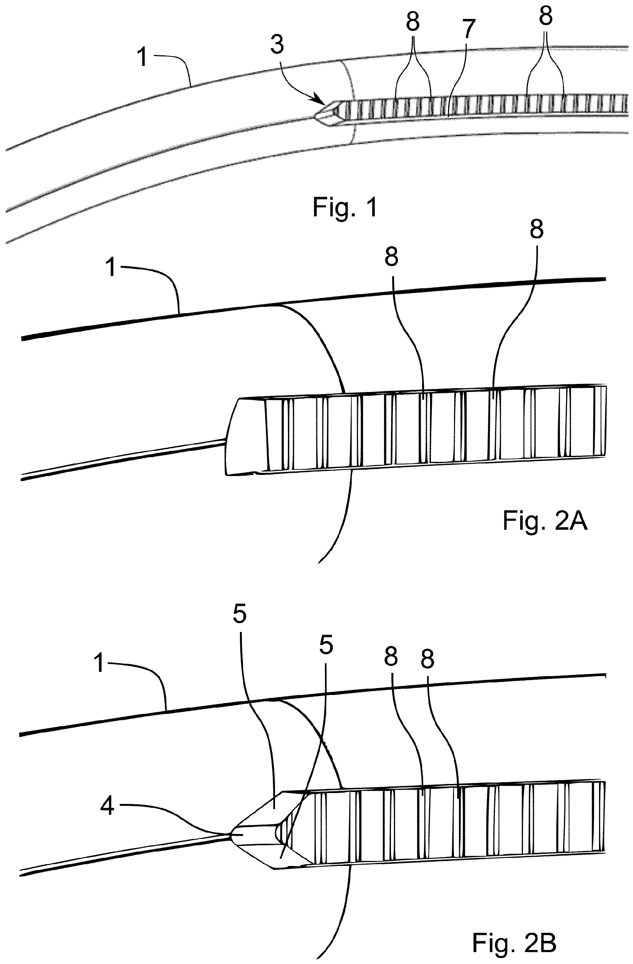

The lightguide 1 can further comprise a groove 7, wherein the row of outcoupling elements is placed inside the groove 7 or forms the groove 7. The first outcoupling element 3 then forms a beveled end portion of the groove 7, as can be seen in figs. 1 to 3, and delimits the groove's 7 width by the maximum distance of the side walls 5. The depth of the other outcoupling elements can then be measured from the bottom of the groove 7, not from the outer surface, and is thus significantly smaller than the depth of the first outcoupling element 3. The depth of the other elements can in some embodiments be e.g., less than 2 mm or even than 1 mm, while the depth of the groove 7 and the first outcoupling element 3 can be e.g., over 3 mm. Generally, the depth of the first outcoupling element 3, as measured from the lightguide's 1 outer surface, can be at least twice the depth of the other elements, as measured from the bottom of the groove 7. The closest distance between the optical axis 2 and the bottom part 4 is then substantially the same (e.g., ± 25 %, preferably ± 10 %) as the distance between the bottom / bottom edge of each of the other outcoupling elements and the optical axis 2.

The other light outcoupling elements can have any shape which can be used to outcouple light, e.g., any shape of outcoupling elements known in the art. For example, they can be formed as identical and equally spaced-apart grooves or notches 8, oriented along the width of the first outcoupling element 3 / groove 7, i.e., perpendicularly to the optical axis 2 (see e.g., fig. 2B).

An exemplary embodiment of the lightguide 1 of the invention described above, is depicted in figs. 1, 2B and 3. Fig. 2A then shows a lightguide 1 according to the state of the art, having a first outcoupling element 3 with parallel side walls 5 and wide bottom part 4. In figs. 1 and 2B, it can be seen that the outcoupling elements are placed in a groove 7, and the first outcoupling element 3 is V-shaped with rounded bottom part 4 and apex angle of about 45°. The inclination of the bottom part 4 is preferably around 25-40°. The other outcoupling elements are all formed as relatively shallow triangular notches 8 at the bottom of the groove 7, with depth equal to about one third of the first element's depth. The light-entry surface is preferably at the very end of the lightguide 1. The cross-section of the lightguide 1, outside of areas with outcoupling elements, can for example be circular.

In some embodiments, the lightguide 1 can be adapted to be lit from both its ends, i.e., it can have a light-entry surface on both ends. The last element of the row of outcoupling elements can then be formed analogically to the first outcoupling element 3, i.e., it can be a second first outcoupling element 3 with converging side walls 5, preferably inclined bottom part 4 etc. The last element can have any or all of the features described above for the first outcoupling elements 3, preferably it has the same features.

In further embodiments, the lightguide 1 can be branched, such that it comprises more than two ends and can thus comprise more light-entry surfaces. The row of outcoupling elements can then also be branched, and can comprise more than two of the first outcoupling elements 3. In some embodiments, the lightguide 1 can comprises multiple rows of outcoupling elements, e.g., located one behind another along the optical axis 2. Other rows can comprise the first optical element according to the invention or can be formed without such element.

The lightguide 1 of the invention can for example be a part of an automobile lamp, which further comprises a light source and further mechanical and optical components, such as frames, lens, reflectors, etc. The lightguide 1 can for example be provided with a white LED and serve as a daytime running light or can be colored orange and serve as a turn signal. It can also be an interior lamp, e.g., on a ceiling or dashboard.

### List of reference numbers

- 1 -: lightguide
- 2 -: optical axis
- 3 -: first outcoupling element
- 4 -: bottom part
- 5 -: side wall
- 6 -: length
- 7 -: groove
- 8 -: notch
- 9 -: hot-spot

## Claims

1. Lightguide (1) for an automobile lamp comprising a light-entry surface and a row of outcoupling elements oriented along the lightguide's (1) optical axis (2), wherein each outcoupling element from the row is formed as an indentation on the lightguide's (1) surface, **characterized in that** the first outcoupling element (3) in the row, closest to the light-entry surface, comprises an elongated bottom part (4) and two diverging side walls (5) attached to the bottom part (4) and delimiting a width of the element, wherein the width is measured in direction perpendicular to the optical axis (2), the bottom part (4) is oriented with its length (6) extending along the optical axis (2) and the width of the first outcoupling element (3) is the smallest at the bottom part (4).

2. The lightguide (1) according to claim 1 wherein the row of outcoupling elements comprises a groove (7) extending along the optical axis (2), wherein the outcoupling elements from the row are located inside of the groove (7) and the first outcoupling element (3) forms the beginning of the groove (7).

3. The lightguide (1) according to claim 2 wherein the largest width of the first outcoupling element (3) is equal to width of the groove (7).

4. The lightguide (1) according to claim 1 wherein the bottom part (4) of the first outcoupling element (3) has two ends, wherein the first end is closer to the light-entry surface than the second end, wherein the first end is farther from the optical axis (2) than the second end.

5. The lightguide (1) according to any of the preceding claims wherein the first outcoupling element (3) has a "V"-shaped cross-section.

6. The lightguide (1) according to any of the preceding claims wherein the outcoupling elements other than the first outcoupling element (3) have the same shape and are arranged equidistantly.

7. The lightguide (1) according to any of the preceding claims wherein the outcoupling elements other than the first outcoupling element (3) are formed as notches (8) perpendicular to the optical axis (2).
